# EUROPEAN PATENT APPLICATION

(11) **EP 4 819 621 A1**
(43) Date of publication of application: **07.10.2026**
(21) Application number: 24896061.9
(22) Date of filing: 18.10.2024
(51) Int. Cl.: H04N 21/472

(54) **TEXT DISPLAY METHOD AND APPARATUS, AND ELECTRONIC DEVICE AND STORAGE MEDIUM**

(30) Priority: 27.11.2023 CN 202311596000
(71) Applicant: Beijing Zitiao Network Technology Co., Ltd., Beijing 100190 (CN)
(72) Inventor: QIN, Chao, Beijing 100028 (CN); QI, Hanmin, Beijing 100028 (CN); PENG, Bing, Beijing 100028 (CN); BI, Wentao, Beijing 100028 (CN)
(74) Representative: Isarpatent
(86) International application number: PCT/CN2024/125898
(87) International publication number: WO 2025/112968

(57) **Abstract**

The present disclosure relates to the technical field of computer vision. Disclosed are a text display method and apparatus, and an electronic device and a storage medium. The text display method provided in the present disclosure comprises: obtaining a plurality of video image frames, wherein the plurality of video image frames include a target video image frame to be subjected to text editing; obtaining a target text from a specified editing position on the target video image frame, and displaying the target text at the specified editing position; rendering the target text, to obtain a rendering result; and aligning the rendering result with the target text, and displaying the aligned rendering result at the specified editing position.

## Description

### CROSS-REFERENCE TO RELATED APPLICATION(S)

The present application claims priority to Chinese Patent Application No. 202311596000.8, filed on November 27, 2023 and entitled "TEXT DISPLAY METHOD AND APPARATUS, ELECTRONIC DEVICE, AND STORAGE MEDIUM", which is incorporated herein by reference in its entirety.

### FIELD

The present disclosure relates to the technical field of computer vision, and in particular to a text display method and apparatus, an electronic device, and a storage medium.

### BACKGROUND

As video plays become increasingly rich and mature, adding texts to videos in video editing software has become a common editing function for users. However, during an actual application process, since the users can view a text rendering result only at a position where a text needs to be added, this makes it inconvenient for the users to quickly determine whether a current rendering result meets the users' text editing intention.

### SUMMARY

In view of this, the present disclosure provides a text display method and apparatus, an electronic device, and a storage medium.

According to a first aspect, the present disclosure provides a text display method. The method includes:
obtaining a plurality of frames of video images, the plurality of frames of video images including a target frame of video image to be subjected to text editing;
obtaining a target text from a specified editing position on the target frame of video image, and displaying the target text at the specified editing position;
rendering the target text to obtain a rendering result; and
aligning the rendering result with the target text, and displaying an aligned rendering result at the specified editing position.

According to a second aspect, the present disclosure provides a text display apparatus. The apparatus includes:
an obtaining module configured to obtain a plurality of frames of video images, the plurality of frames of video images including a target frame of video image to be subjected to text editing;
a first execution module configured to obtain a target text from a specified editing position on the target frame of video image, and display the target text at the specified editing position;
a rendering module configured to render the target text to obtain a rendering result; and
a second execution module configured to align the rendering result with the target text, and display an aligned rendering result at the specified editing position.

According to a third aspect, the present disclosure provides an electronic device. The electronic device includes: a memory and a processor communicatively connected to each other, where the memory has computer instructions stored therein, and the processor executes the computer instructions to perform the text display method according to the first aspect or any one of the corresponding implementations thereof.

According to a fourth aspect, the present disclosure provides a computer-readable storage medium having stored thereon computer instructions that are configured to cause a computer to perform the text display method according to the first aspect or any one of the corresponding implementations thereof.

According to the text display method provided in embodiments of the present disclosure, the target frame of video image to be subjected to text editing is determined from the plurality of frames of video images first, the target text is obtained from and displayed at the specified editing position in the target frame of video image where text editing is to be performed, and then the target text is rendered to obtain the rendering result.

### BRIEF DESCRIPTION OF THE DRAWINGS

To more clearly describe the technical solutions in detailed description of the present disclosure or in the conventional art, the accompanying drawings for describing the detailed description or the conventional art will be briefly described below. Apparently, the accompanying drawings in the description below show some implementations of the present disclosure, and those of ordinary skill in the art may still derive other accompanying drawings from these accompanying drawings without creative efforts.
FIG. 1 is a schematic diagram of text editing input in the conventional art;
FIG. 2 is a schematic diagram of a rendering effect result in the conventional art;
FIG. 3 is a schematic flowchart of a text display method according to an embodiment of the present disclosure;
FIG. 4 is a schematic diagram of text editing input according to an embodiment of the present disclosure;
FIG. 5 is a schematic diagram of displaying a target text according to an embodiment of the present disclosure;
FIG. 6 is a schematic diagram of a rendering effect according to an embodiment of the present disclosure;
FIG. 7 is a schematic flowchart of another text display method according to an embodiment of the present disclosure;
FIG. 8 is a schematic flowchart of still another text display method according to an embodiment of the present disclosure;
FIG. 9 is a schematic diagram of another rendering effect according to an embodiment of the present disclosure;
FIG. 10 is a schematic diagram of an engine position relationship according to an embodiment of the present disclosure;
FIG. 11 is a schematic diagram of a component framework of video editing software according to an embodiment of the present disclosure;
FIG. 12 is a structural block diagram of a text display apparatus according to an embodiment of the present disclosure; and
FIG. 13 is a schematic diagram of a hardware structure of an electronic device according to an embodiment of the present disclosure.

### DETAILED DESCRIPTION OF EMBODIMENTS

In order to make the objectives, technical solutions, and advantages of embodiments of the present disclosure clearer, the technical solutions in the embodiments of the present disclosure are described clearly and completely below with reference to the accompanying drawings in the embodiments of the present disclosure. Apparently, the embodiments described are some rather than all of the embodiments of the present disclosure. All other embodiments obtained by those skilled in the art based on the embodiments of the present disclosure without any creative efforts shall fall within the scope of protection of the present disclosure.

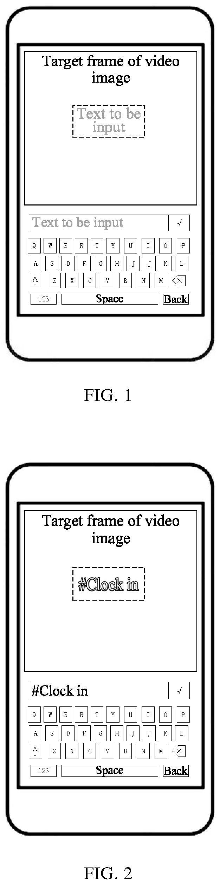

As shown in FIG. 1, in practical applications, when a user needs to add a text to a current video, it is necessary to pre-determine a text addition position (dashed box in video content) in a current frame of video where the text needs to be added, and then input a text to be input in an input box provided by a keyboard. When the input of the text to be input is completed, a rendering result of the text to be input is displayed at the text addition position. For example, as shown in FIG. 2, taking a case where the text to be input is "#clock in" as an example, when the input of "#clock in" in the input box provided by the keyboard is completed, a rendering result corresponding to "#clock in" is displayed at the text addition position.

Since an input position of the text to be input and a display position of the rendering result are provided by different controls and there is also a large difference in display positions, performing text editing in this way makes it inconvenient for the user to quickly determine whether a current rendering result meets the user's text editing intention.

Based on this, an embodiment of the present disclosure provides a text display method, which can enable a user to directly view a rendering result of a target text at a specified editing position where the target text is input, so that the user can quickly determine whether an aligned rendering result currently displayed at the specified editing position meets their own requirements, thereby helping to enhance an interaction capability of video editing software in performing text editing, and making the display of the rendering result of the target text more intuitive and user-friendly.

According to an embodiment of the present disclosure, a text display method embodiment is provided. It is to be noted that steps shown in a flowchart of the accompanying drawings may be performed, for example, in a computer system including a group of computer-executable instructions. Although a logical order is shown in the flowchart, the steps shown or described may be performed in an order different from that shown herein in some cases.

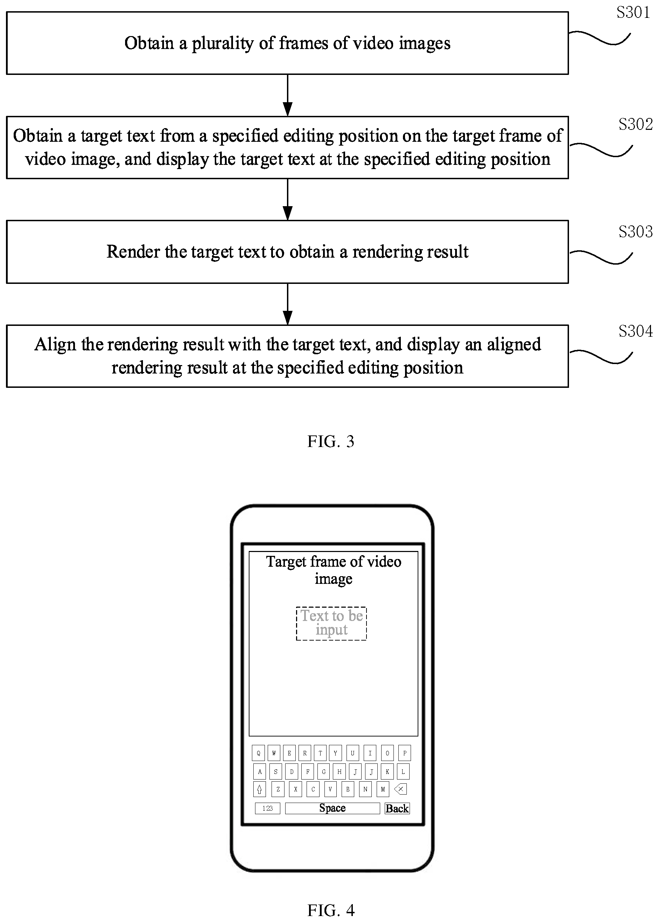

The embodiments provide a text display method, which may be applied to the above-mentioned electronic device, such as a computer or a mobile terminal. FIG. 3 is a flowchart of a text display method according to an embodiment of the present disclosure. As shown in FIG. 3, the process includes the following steps.

Step S301: a plurality of frames of video images are obtained.

The plurality of frames of video images include a target frame of video image to be subjected to text editing. The plurality of frames of video images may be all frames of video images that form a video, or may be part of frames of video image that are captured according to a user's requirements.

The video corresponding to the plurality of frames of video images comes from a scene recorded in real time using a camera device (such as a video camera, a smart phone, or a surveillance camera). The video may be obtained from a local database or may be downloaded from a cloud database. There is no limitation on the obtaining way for videos to be recognized herein, which may be set according to actual requirements.

Step S302: a target text is obtained from a specified editing position on the target frame of video image, and display the target text at the specified editing position.

The specified editing position may be understood as a position where text editing is allowed, which may be a user-specified position or a preset default position. The target text may be understood as a text that the user needs to add to the target frame of video image.

When the target text is obtained at the specified editing position on the target frame of video image, it indicates that the user has input the target text at the specified editing position. Therefore, in order to help the user to clearly determine content that is currently input at the specified editing position, the target text is displayed at the specified editing position so that the user can intuitively view the currently input target text, and when the target text is input incorrectly, the target text can be adjusted in time to obtain a correct target text.

Step S303: the target text is rendered to obtain a rendering result.

In order to make the display of the target text more beautiful, the currently obtained target text is rendered to obtain the rendering result. The rendering of the target text includes, but is not limited to: a font, a font size, a color, alignment, a shadow, a stroke, and other effects. The rendering result after rendering may be a static picture or a dynamic animation effect, which depends on the user's choice, and is not limited herein.

Step S304: the rendering result is aligned with the target text, and an aligned rendering result is displayed at the specified editing position.

Since the rendering result after rendering may differ greatly from the target text, in order to help the user to view a display result of the rendered target text more intuitively, a correspondence between the rendering result and the target text is established, to assign the rendering result with the target text, thereby ensuring that the aligned rendering result may be displayed directly at the specified editing position. This allows the user to more intuitively determine whether a current rendering effect meets their own requirements, and makes the display of the rendering result of the target text more user-friendly, thereby helping the user to quickly complete text editing.

According to the text display method provided in this embodiment, the target frame of video image to be subjected to text editing is determined from the plurality of frames of video images first, the target text is obtained from and displayed at the specified editing position in the target frame of video image where text editing is to be performed, and then the target text is rendered to obtain the rendering result. In order to help the user to view the rendering result of the target text at the specified editing position intuitively, the rendering result is aligned with the target text, and the aligned rendering result is displayed at the specified editing position, so that the user can quickly determine whether the aligned rendering result currently displayed at the specified editing position meets their own requirements, which helps to enhance an interaction capability of video editing software in performing text editing, and makes the display of the rendering result of the target text more user-friendly, thereby improving the user experience.

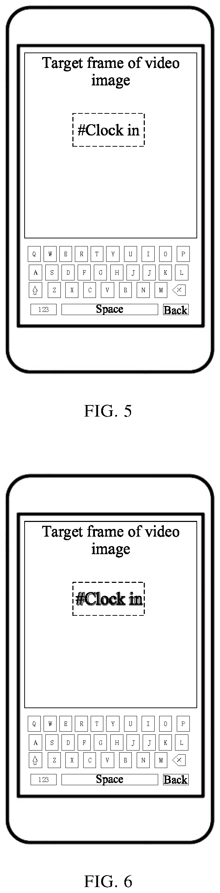

In some alternative implementation scenarios, the process of displaying the display result of the rendered target text by using the text display method described above may be as shown in FIGS. 4 to 6. As shown in FIG. 4, a dashed box in the target frame of video image is the specified editing position. As shown in FIG. 5, after the user has selected the specified editing position, a target text ("#clock in") may be input on a text to be input, and then after the input of "#clock in" is completed, the target text may be displayed at the specified editing position. Taking a case where the rendering effect is to display "#clock in" in bold as an example, a schematic diagram of displaying the aligned rendering result at the specified editing position may be as shown in FIG. 6. Bolded "#clock in" superimposed with "#clock in" is the aligned rendering result, which may be used as the display result of the rendered target text.

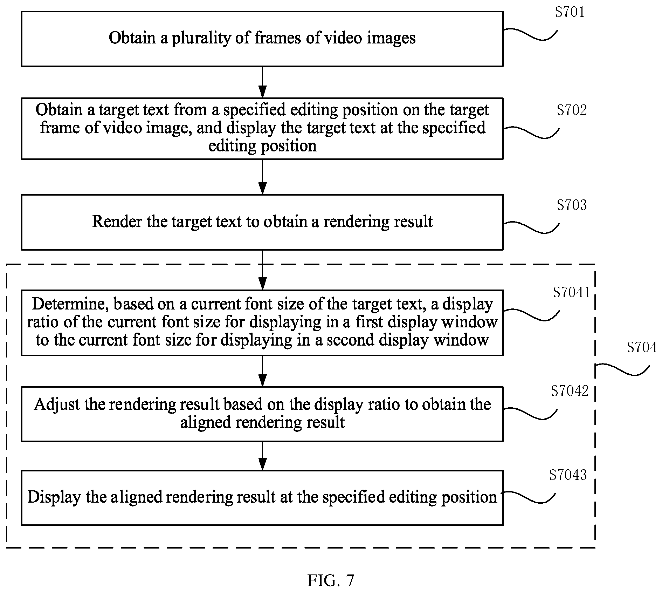

The embodiments provide a text display method, which may be applied to the above-mentioned electronic device, such as a computer or a mobile terminal. FIG. 7 is a flowchart of a text display method according to an embodiment of the present disclosure. As shown in FIG. 7, the process includes the following steps.

Step S701: a plurality of frames of video images are obtained.

Step S702: a target text is obtained from a specified editing position on the target frame of video image, and the target text is displayed at the specified editing position.

Step S703: the target text is rendered to obtain a rendering result.

Step S704: the rendering result is aligned with the target text, and an aligned rendering result is displayed at the specified editing position.

As an example, step S704 includes the following steps.

Step S7041: a display ratio of the current font size for displaying in a first display window to the current font size for displaying in a second display window is determined based on a current font size of the target text,.

The first display window is a window displaying the plurality of frames of video images, and the second display window is a window displaying the rendering result. The rendering result and the target text are displayed in different windows, respectively, and different windows may differ in displaying texts. Therefore, in order to facilitate targeted alignment of the rendering result with the target text, in a case of determining the current font size of the target text, the display ratio of the current font size for displaying in the first display window to the current font size for displaying in the second display window is determined, so that it can be ensured, by using the display ratio, that a font size of the aligned rendering result displayed in the second display window is consistent with the current font size.

In an alternative implementation scenario, in a case where the current font size is determined, the display ratio may be calculated in the following manner.

The current font size (fontSize) of the target text for display in the first display window is in points (pt), which is converted to pixels with the following expression: systemSize * ScreenScale, where systemSize is a font size in points, and ScreenDPI is dots per inch of the first display window.

A pixel conversion expression corresponding to the second display window is as follows: fontSize*300/72.0, where 300 represents dots per inch of the second display window, and 72.0 is the number of points per inch.

In order to align the rendering result with the target text, the following relation is established:

```
fontSize*300/72.0=systemSize*ScreenScale;
fontSize=systemSize*ScreenScale*72.0/300; and
fontSize=systemSize*(Player2Width/(Player1Width*ScreenScale))*ScreenScale*72.0/300.
```

The resulting display ratio is rate=Player2Width/Player1Width)*(72.0/300.0).

Player2Width is a display width of the second display window. Player1Width is a display width of the first display window. In an example, Player2Width may be a preset fixed value, such as: 720.0.

Step S7042: the rendering result is adjusted based on the display ratio to obtain the aligned rendering result.

Based on the display ratio, an adjustment direction of the rendering result may be determined, and thus the targeted alignment may be achieved to obtain the aligned rendering result. This ensures that the readability of the aligned rendering result may not be affected during subsequent display, which is conducive to enhancing of the visualization effect of the display result of the rendered target text, thereby improving the user experience.

In an alternative implementation scenario, step S7042 includes the following steps.

Step a1: a first value corresponding to a text configuration parameter is determined based on the target text that is displayed in the first display window in the current font size.

The text configuration parameter may be understood as a configuration parameter for displaying the target text in the current font size in the first display window. The text configuration parameter includes, but is not limited to, the following parameters: a font size, a text width, a background border radius, a character spacing, a line spacing, a shadow width, etc. In order to facilitate determining of the adjustment direction, first, the first value corresponding to the text configuration parameter when the target text is displayed in the first display window is determined.

Step a2: a second value of the text configuration parameter in the second display window is determined based on the display ratio and the first value.

Based on the display ratio and the first value, a value after the adjustment suitable for the second display window may be obtained, which can ensure that the text maintains a consistent configuration effect in different display windows, thereby providing unified user experience with high readability.

In an alternative implementation scenario, the calculation process for determining the second value by using the first value may be as shown in Table 1 below:

**Table 1**

| | First value | Second value |
|---|---|---|
| Font size | 28.0 | rate=(720/playerWidth)*(72.0/300.0) |
| | | EffectSize=28*rate |
| Maximum display width | SCREEN_WIDTH - 24 | "-1", where \n is manually inserted at a line break point of a text editing component on a service side |
| Background border radius | 6.0 | 28*rate |
| Character spacing | Font size kern is disabled | 0 |
| Line spacing | A fixed line height is set | 0.44*rate |
| Shadow width | The baseline of the text is offset upwards by a distance of 1.5 points (NSBaselineOffsetAttributeName:@(-1.5f)) | Maximum value: 0.5*rate |
| | | Shadow transparency (shadowalpha) set to 0.8 due to display differences |

The text editing component is a component that supports the user in inputting the target text in the first display window.

Step a3: a text configuration parameter of the rendering result is adjusted based on the second value to obtain the aligned rendering result.

In order to make a display font size of the rendering result the same as the current font size, the text configuration parameter of the rendering result is adjusted based on the second value in a targeted manner, to obtain an aligned rendering result that can be consistent with the target text.

In some alternative implementations, in response to the text configuration parameter being the maximum display width, step a3 includes the following steps.

Step a31: a first number of display lines of the target text in the first display window is determined.

Step a32: a second number of display lines of the rendering result for the second display result is determined.

Step a33: in response to the second number of display lines being greater than the first number of display lines, a line break is added to the target text to change the first number of display lines to the second number of display lines.

As an example, the first number of display lines when the target text is currently displayed using the first display window is determined based on the maximum display width of the first display window. The second number of display lines of the aligned rendering result for the second display result is determined based on a maximum display width of the second display window. To avoid a case where the second number of display lines after rendering being inconsistent with the first number of display lines affects the user's visual experience, the second number of display lines is compared with the first number of display lines. In response to the second number of display lines being greater than the first number of display lines, a line break is added to the target text to change the first number of display lines to the second number of display lines, thereby ensuring that the aligned rendering result has the same number of display lines as that displayed in the target text.

Step S7043: the aligned rendering result is displayed at the specified editing position.

According to the text display method provided in this embodiment, the rendering result is aligned with the target text, and then the aligned rendering result is displayed at the specified editing position. This ensures that the readability of the aligned rendering result may not be affected during subsequent display, which is conducive to enhancing of the visualization effect of the display result of the rendered target text, thereby improving the user experience.

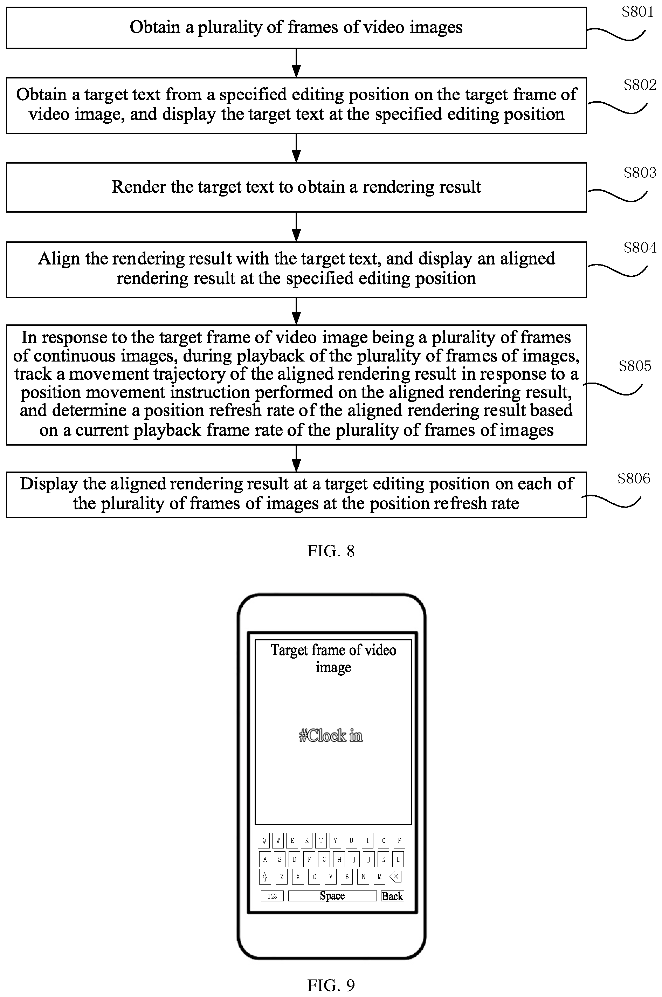

The embodiments provide a text display method, which may be applied to the above-mentioned electronic device, such as a computer or a mobile terminal. FIG. 8 is a flowchart of a text display method according to an embodiment of the present disclosure. As shown in FIG. 8, the process includes the following steps.

Step S801: a plurality of frames of video images are obtained.

Step S802: a target text is obtained from a specified editing position on the target frame of video image, and the target text is displayed at the specified editing position.

Step S803: the target text is rendered to obtain a rendering result.

Step S804: the rendering result is aligned with the target text, and an aligned rendering result is displayed at the specified editing position.

Step S805: In response to the target frame of video image being a plurality of frames of continuous images, during playback of the plurality of frames of images, a movement trajectory of the aligned rendering result is tracked in response to a position movement instruction performed on the aligned rendering result, and a position refresh rate of the aligned rendering result is determine based on a current playback frame rate of the plurality of frames of images.

When the display of the aligned rendering result in the target frame of video image is previewed, the plurality of frames of images are played. However, during the playback of the plurality of frames of images, if the position movement instruction triggered by the user for the aligned rendering result is received, the movement trajectory of the aligned rendering result is tracked to determine a target editing position on each frame of image at which the aligned rendering result is displayed correspondingly.

To achieve a more user-friendly display effect of the aligned rendering result, a position refresh rate of the aligned rendering result is determined based on a current playback frame rate of the plurality of frames of images, so that during the process of moving the aligned rendering result, the aligned rendering result can be displayed correspondingly following the movement of the position, thereby improving the user experience.

As an example, step S805 includes the following step.

Step b1: the current playback frame rate is switched to a target playback frame rate, and a second position refresh rate of the aligned rendering result is determined based on the target playback frame rate.

The target playback frame rate is higher than the current playback frame rate. To improve drag smoothness of the aligned rendering result, the current playback frame rate is switched to the target playback frame rate, and thus the second position refresh rate of the aligned rendering result is determined based on the target playback frame rate, which can ensure a better alignment effect. For example, if the current playback frame rate is 30 frames per second, the target playback frame rate may be adjusted to 60 frames per second.

In some alternative implementations, step S805 further includes the following step.

Step b2: the target playback frame rate is restored to the current playback frame rate in response to the aligned rendering result stopping movement.

The purpose of adjusting the target playback frame rate is to ensure that the aligned rendering result can be aligned and displayed following the movement of the user's gestures, to improve the user's preview experience, rather than adjusting a playback speed of the plurality of frames of images. Therefore, after the user stops moving the aligned rendering result, the target playback frame rate is restored to the current playback frame rate.

Step S806: the aligned rendering result is displayed at a target editing position on each of the plurality of frames of images at the position refresh rate.

Displaying the corresponding aligned rendering result at the target editing position on each frame of image at the position refresh rate can ensure that the aligned rendering result can be kept consistent on a plurality of frames of images, thereby achieving visual coherence, which can improve the visual effect and enhance the user experience.

The text display method provided in this embodiment can diversify text editing functions for videos, thereby not only improving the visual effect but also enhancing the user experience.

In an alternative implementation, to help the user to clearly view an aligned rendering effect, the target text displayed at the specified editing position is hidden. For example, with reference to the target text shown in FIG. 5, the target text is displayed as shown in FIG. 9.

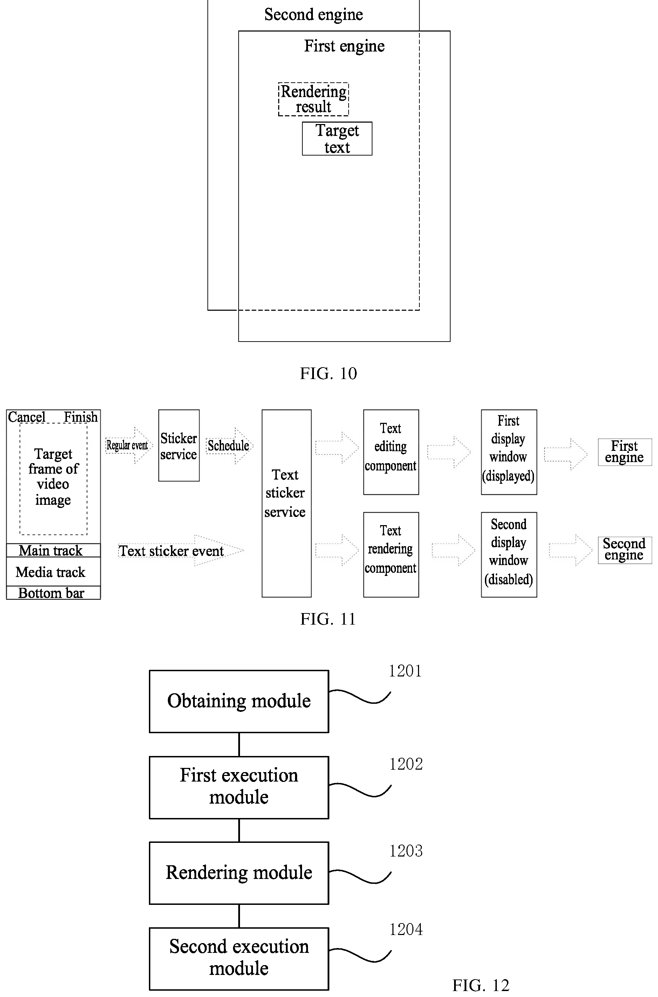

In an alternative implementation scenario, the first display window may be provided by a first engine of a current operating system of the electronic device, and the second display window may be provided by a second engine. The first engine may be understood as an engine embedded in the current operating system that is configured to perform text editing tasks. That is, when the user needs to input the target text, the first engine is called so that the user can input the target text through a text editing component provided by the first engine. The second engine may be understood as an engine that is configured to perform text rendering tasks. When the target text needs to be rendered, the second engine obtains, from the first engine, the target text to be subjected to text rendering, and renders the target text through a text rendering component provided by the second engine to obtain the rendering result. In an example, as shown in FIG. 10, during the process of performing text editing on the target frame of video image, the second engine is located below the first engine, thereby facilitating better alignment of the rendering result with the target text input by the user.

Based on the same concept, the present disclosure further provides a component framework of video editing software. As shown in FIG. 11, when a user inputs a target text at a specified editing position on a target frame of video image, a text rendering component provided by a second engine is disabled, and a text editing component provided by a first engine is displayed, so that the user can input and display the target text on the text editing component. When the input of the target text is completed, the text editing component is automatically hidden, and the second engine is started to render the target text. Then, through text alignment, an aligned rendering result is displayed at a position where the target text is input (the specified editing position), thereby leveraging visual differences to enable the video editing software to support both text editing and advanced display effects.

The embodiments further provide a text display apparatus. The apparatus is configured to implement the above-mentioned embodiments and preferred implementations, which have already been described and details are not described herein again. As used below, the term "module" may be a combination of software and/or hardware that implements a predetermined function. Although the apparatus described in the following embodiment is preferably implemented in software, it is also possible and contemplated that the apparatus is implemented in hardware or a combination of software and hardware.

The embodiments provide a text display apparatus. As shown in FIG. 12, the apparatus includes:
an obtaining module 1201 configured to obtain a plurality of frames of video images, the plurality of frames of video images including a target frame of video image to be subjected to text editing;
a first execution module 1202 configured to obtain a target text from a specified editing position on the target frame of video image, and display the target text at the specified editing position;
a rendering module 1203 configured to render the target text to obtain a rendering result; and a second execution module 1204 configured to align the rendering result with the target text, and display an aligned rendering result at the specified editing position.

In some alternative implementations, the first execution module 1202 includes: a first processing unit configured to determine, based on a current font size of the target text, a display ratio of the current font size for displaying in a first display window to the current font size for displaying in a second display window, where the first display window is a window displaying the plurality of frames of video images, and the second display window is a window displaying the rendering result; a first adjustment unit configured to adjust the rendering result based on the display ratio to obtain the aligned rendering result; and a second processing unit configured to display the aligned rendering result at the specified editing position.

In some alternative implementations, the first adjustment unit includes: a first determination unit configured to determine a first value corresponding to a text configuration parameter based on the target text that is displayed in the first display window in the current font size; a second determination unit configured to determine a second value of the text configuration parameter in the second display window based on the display ratio and the first value; and a third processing unit configured to adjust a text configuration parameter of the rendering result based on the second value to obtain the aligned rendering result.

In some alternative implementations, the second determination unit includes: a first line number determination module configured to determine a first number of display lines of the target text in the first display window; a second line number determination module configured to determine a second number of display lines of the rendering result for the second display result; and a first adjustment module configured to add a line break to the target text to change the first number of display lines to the second number of display lines, in response to the second number of display lines being greater than the first number of display lines.

In some alternative implementations, in response to the target frame of video image being a plurality of frames of continuous images, the apparatus further includes: a second adjustment module configured to: during playback of the plurality of frames of images, track a movement trajectory of the aligned rendering result in response to a position movement instruction performed on the aligned rendering result, and determine a position refresh rate of the aligned rendering result based on a current playback frame rate of the plurality of frames of images; and a display module configured to display the aligned rendering result at a target editing position on each of the plurality of frames of images at the position refresh rate.

In some alternative implementations, the display module includes: a fourth processing unit configured to switch the current playback frame rate to a target playback frame rate, and determine a second position refresh rate of the aligned rendering result based on the target playback frame rate, where the target playback frame rate is higher than the current playback frame rate.

In some alternative implementations, the apparatus further includes: a third execution module configured to restore the target playback frame rate to the current playback frame rate in response to the aligned rendering result stopping movement.

In some alternative implementations, before displaying the aligned rendering result at the specified editing position, the apparatus further includes: a fourth execution module configured to hide the target text displayed at the specified editing position.

Further functional descriptions of the above-mentioned modules and units are the same as those in the above-mentioned corresponding embodiments. Details are not described herein again.

The text display apparatus in this embodiment is presented in the form of a functional unit, the unit herein is an application specific integrated circuit (ASIC), a processor and a memory that execute one or more software programs or fixed programs, and/or another device that can provide the above-mentioned functions.

An embodiment of the present disclosure further provides an electronic device having the text display apparatus as shown in FIG. 12 above.

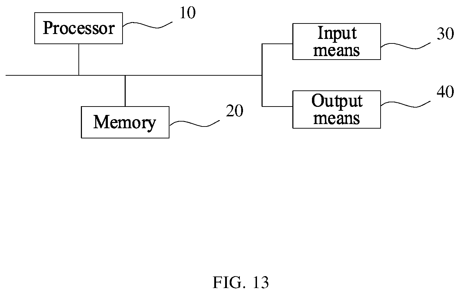

Referring to FIG. 13, FIG. 13 is a schematic structural diagram of an electronic device according to an alternative embodiment of the present disclosure. As shown in FIG. 13, the electronic device includes: one or more processors 10, a memory 20, and interfaces for connecting components, including a high-speed interface and a low-speed interface. The components are communicatively connected to each other via different buses, and can be mounted on a common motherboard or otherwise as desired. The processor may process instructions executed in the electronic device, including instructions stored in or on the memory to display graphical information of a GUI on an external input/output means (such as a display device coupled to the interface). In some alternative implementations, if required, a plurality of processors and/or a plurality of buses may be used together with a plurality of memories and a plurality of memories. Likewise, a plurality of electronic devices may be connected, each providing some of the necessary operations (e.g., as a server array, a set of blade servers, or a multi-processor system). One processor 10 is used as an example in FIG. 13.

The processor 10 may be a central processor, a network processor, or a combination thereof. The processor 10 may further include a hardware chip. The hardware chip may be an application-specific integrated circuit, a programmable logic device, or a combination thereof. The programmable logic device may be a complex programmable logic device, a field-programmable gate array, a generic array logic, or any combination thereof.

The memory 20 stores instructions executable by at least one processor 10, to cause the at least one processor 10 to perform and implement the method shown in the above-mentioned embodiments.

The memory 20 may include a program storage area and a data storage area. The program storage area may store an operating system, and an application required by at least one function. The data storage area may store data created based on use of the electronic device, and the like. In addition, the memory 20 may include a high-speed random-access memory, and may further include a non-transitory memory, such as at least one magnetic disk storage device, a flash memory device, or other non-transitory solid-state storage devices. In some alternative implementations, the memory 20 optionally includes memories remotely provided relative to the processor 10. The remote memories may be connected to the electronic device over a network. Instances of the network include, but are not limited to, the Internet, intranets, local area networks, mobile communication networks, and combinations thereof.

The memory 20 may include a volatile memory, such as a random-access memory. The memory may also include a non-volatile memory, such as a flash memory, a hard disk drive, or a solid-state drive. The memory 20 may also include a combination of the above-mentioned types of memories.

The electronic device further includes an input means 30 and an output means 40. The processor 10, the memory 20, the input means 30, and the output means 40 may be connected through a bus or in another manner, for example, are connected through the bus in FIG. 13.

The input means 30 can receive entered numeric or character information and generate a key signal input related to a user setting and function control of the electronic device, such as a touch screen, a keypad, a mouse, a trackpad, a touchpad, a pointing stick, one or more mouse buttons, a trackball, or a joystick. The output means 40 may include a display device, an auxiliary lighting means (for example, an LED), a tactile feedback means (for example, a vibration motor), and the like. The display device includes, but is not limited to, a liquid crystal display, a light-emitting diode, a display, and a plasma display. In some alternative implementations, the display device may be a touch screen.

An embodiment of the present disclosure further provides a computer-readable storage medium. The above-mentioned method according to an embodiment of the present disclosure may be implemented in hardware or firmware, or implemented as computer code that may be recorded on a storage medium, or implemented as computer code that is originally stored on a remote storage medium or a non-transitory machine-readable storage medium downloaded over a network and that is to be stored on a local storage medium, so that the method described herein may be processed by such software stored on a storage medium using a general-purpose computer, a special-purpose processor, or programmable or special-purpose hardware. The storage medium may be a magnetic disk, an optical disc, a read-only storage memory, a random storage memory, a flash memory, a hard disk drive or a solid-state drive, etc. Further, the storage medium may also include a combination of the above-mentioned types of memories. It can be understood that a computer, a processor, a microprocessor controller, or programmable hardware includes a storage component that can have stored therein or receive software or computer code. When the software or computer code is accessed and executed by the computer, the processor, or the hardware, the methods shown in the above-mentioned embodiments are implemented.

It can be understood that before the use of the technical solutions disclosed in the embodiments of the present disclosure, the user shall be informed of the type, range of use, use scenarios, etc., of personal information involved in the present disclosure in an appropriate manner in accordance with the relevant laws and regulations, and the authorization of the user shall be obtained.

For example, in response to reception of an active request from the user, prompt information is sent to the user to clearly inform the user that a requested operation will require access to and use of the personal information of the user. As such, the user can independently choose, based on the prompt information, whether to provide the personal information to software or hardware, such as an electronic device, an application, a server, or a storage medium, that performs operations in the technical solutions of the present disclosure.

In an alternative but non-limiting implementation, in response to the reception of the active request from the user, the prompt information may be sent to the user in the form of, for example, a pop-up window, in which the prompt information may be presented in text. Furthermore, the pop-up window may further include a selection control for the user to choose whether to "agree" or "disagree" to provide the personal information to the electronic device.

It can be understood that the above-mentioned process of notifying and obtaining the authorization of the user is only illustrative and does not constitute a limitation on the implementations of the present disclosure, and other manners that satisfy the relevant laws and regulations may also be applied in the implementations of the present disclosure.

Although the embodiments of the present disclosure are described with reference to the accompanying drawings, those skilled in the art would provide various modifications and variations without departing from the spirit and scope of the present disclosure, and such modifications and variations shall all fall within the scope defined by the appended claims.

## Claims

1. A text display method, comprising:
obtaining a plurality of frames of video images, the plurality of frames of video images comprising a target frame of video image to be subjected to text editing;
obtaining a target text from a specified editing position on the target frame of video image, and displaying the target text at the specified editing position;
rendering the target text to obtain a rendering result; and
aligning the rendering result with the target text, and displaying an aligned rendering result at the specified editing position.

2. The method according to claim 1, wherein aligning the rendering result with the target text, and displaying the aligned rendering result at the specified editing position comprise:
determining, based on a current font size of the target text, a display ratio of the current font size for displaying in a first display window to the current font size for displaying in a second display window, wherein the first display window is a window displaying the plurality of frames of video images, and the second display window is a window displaying the rendering result;
adjusting the rendering result based on the display ratio to obtain the aligned rendering result; and
displaying the aligned rendering result at the specified editing position.

3. The method according to claim 2, wherein adjusting the rendering result based on the display ratio to obtain the aligned rendering result comprises:
determining a first value corresponding to a text configuration parameter based on the target text that is displayed in the first display window in the current font size;
determining a second value of the text configuration parameter in the second display window based on the display ratio and the first value; and
adjusting a text configuration parameter of the rendering result based on the second value to obtain the aligned rendering result.

4. The method according to claim 3, wherein in response to the text configuration parameter being a maximum display width, adjusting the text configuration parameter of the rendering result based on the second value to obtain the aligned rendering result comprises:
determining a first number of display lines of the target text in the first display window;
determining a second number of display lines of the rendering result for the second display result; and
adding, in response to the second number of display lines being greater than the first number of display lines, a line break to the target text to change the first number of display lines to the second number of display lines.

5. The method according to claim 1, wherein in response to the target frame of video image being a plurality of frames of continuous images, the method further comprises:
during playback of the plurality of frames of images, tracking a movement trajectory of the aligned rendering result in response to a position movement instruction performed on the aligned rendering result, and determining a position refresh rate of the aligned rendering result based on a current playback frame rate of the plurality of frames of images; and
displaying the aligned rendering result at a target editing position on each of the plurality of frames of images at the position refresh rate.

6. The method according to claim 5, wherein determining the position refresh rate of the aligned rendering result based on the current playback frame rate of the plurality of frames of images comprises:
switching the current playback frame rate to a target playback frame rate, and determining a second position refresh rate of the aligned rendering result based on the target playback frame rate, wherein the target playback frame rate is higher than the current playback frame rate.

7. The method according to claim 6, further comprising:
restoring the target playback frame rate to the current playback frame rate in response to the aligned rendering result stopping movement.

8. The method according to claim 1, wherein prior to displaying the aligned rendering result at the specified editing position, the method further comprises:
hiding the target text displayed at the specified editing position.

9. A text display apparatus, comprising:
an obtaining module configured to obtain a plurality of frames of video images, the plurality of frames of video images comprising a target frame of video image to be subjected to text editing;
a first execution module configured to obtain a target text from a specified editing position on the target frame of video image, and display the target text at the specified editing position;
a rendering module configured to render the target text to obtain a rendering result; and
a second execution module configured to align the rendering result with the target text, and display an aligned rendering result at the specified editing position.

10. An electronic device, comprising:
a memory and a processor communicatively connected to each other, wherein the memory has computer instructions stored therein, and the processor executes the computer instructions to perform the text display method according to any of claims 1 to 8.

11. A computer-readable storage medium having stored thereon computer instructions that are configured to cause a computer to perform the text display method according to any of claims 1 to 8.
